# EUROPÄISCHE PATENTANMELDUNG

(11) **EP 1 217 419 A1**
(43) Veröffentlichungstag der Anmeldung: **26.06.2002**
(21) Anmeldenummer: 01130363.3
(22) Anmeldetag: 20.12.2001
(51) Int. Cl.: G02C 7/08

(54) **Verfahren zum Anfertigen einer Fernrohr- oder Lupenbrille und nach diesem Verfahren hergestellte Fernrohr- oder Lupenbrille (Schnellmontagesystem)**

(30) Priorität: 22.12.2000 DE 10064715
(71) Anmelder: ESCHENBACH OPTIK GmbH + Co., 90409 Nürnberg (DE)
(72) Erfinder: Winkler, Kurt, 90574 Rosstal (DE); Alles, Mark, 90537 Feucht (DE)
(74) Vertreter: Mörtel & Höfner

(57) **Zusammenfassung**

Bei einer Fernrohr- oder Lupenbrille mit einem optischen System (40), das in einer in einem Fassungsrand (4) eines Brillengestells (2) fixierten Trägerscheibe (6) eingepasst ist, ist in eine kreisrunde Aufnahmeöffnung (8) der Trägerscheibe (6) drehfixiert eine erste Aufnahmescheibe (20) mit einer exzentrisch angeordneten ersten kreisrunden Durchgangsöffnung (22) eingesetzt. In diese erste Durchgangsöffnung (22) ist drehfixiert eine zweite Aufnahmescheibe (24) mit einer exzentrisch angeordneten zweiten Durchgangsöffnung (26) zur Aufnahme des optischen Systems (40) eingesetzt. Eine in dieser Weise aufgebaute Fernrohr- oder Lupenbrille kann einfach und schnell hergestellt und flexibel an die individuellen Gegebenheiten des Träger angepasst werden.

## Beschreibung

Die Erfindung bezieht sich auf ein Verfahren zum Anfertigen einer Fernrohr- oder Lupenbrille und eine nach diesem Verfahren angefertigte Fernrohr- oder Lupenbrille.

Eine Fernrohr- oder Lupenbrille enthält entweder monokular oder binokular ein stark vergrößerndes optisches System, das je nach Verwendungszweck (Fernbereich oder Nahbereich) entweder ein Fernrohr- oder ein Lupensystem ist. Eine solche Fernrohr- oder Lupenbrille dient einerseits zur Herstellung einer gewissen Sehfähigkeit bei Patienten, deren Sehvermögen stark eingeschränkt ist. Andererseits dient sie in monokularer oder binokularer Ausgestaltung auch als Arbeitshilfe bei der Durchführung von feinen Arbeiten, beispielsweise im Bereich der Chirurgie.

Die Leistungsfähigkeit und Praktikabilität einer solchen Fernrohr- oder Lupenbrille hängt wesentlich davon ab, wie präzise diese, d. h. das in ihr eingesetzte optische System, an die jeweiligen anatomischen Gegebenheiten des Benutzers, d. h. den Mittenabstand der Pupillen (Pupillendistanz PD), den Abstand zwischen dem Hornhautscheitel und dem Okular des optischen Systems (Hornhautscheitelabstand HSA) und die Höhenlage der Pupille relativ zum jeweils verwendeten Brillengestell (Systemträger) angepasst ist. Dabei muss sichergestellt sein, dass der Durchblickspunkt des Patienten und damit die optische Achse der Pupille mit der optischen Achse des jeweils verwendeten optischen Systems zusammenfällt, um optimale Ergebnisse zu erzielen. Bei axialen Fehlstellungen des Auges (Schielen) muss außerdem noch die Winkellage des optischen Systems eingestellt werden.

Wesentlich für die Inanspruchnahme einer derartigen Sehhilfe ist außerdem, dass deren komplette Anfertigung, d.h die Ein- und Anpassung des optischen Systems in ein Brillengestell, problemlos durch einen Augenoptiker vorgenommen werden kann. Nur in einem solchen Falle ist eine flächendeckende Versorgung der Fehlsichtigen möglich.

Aus der deutschen Patentschrift 35 30 649 C1 ist ein Verfahren zur Ein- und Anpassung vergrößernder Sehhilfen und danach hergestellter Fernrohrbrillen bekannt, das die Anfertigung einer solchen Brille durch den Augenoptiker ermöglicht. Bei diesem Verfahren wird eine als Brillenglas dienende Trägerscheibe (Adapterscheibe) mit einer vorgefertigten Öffnung verwendet. Diese wird zur Erleichterung der weiteren Bearbeitung und Justage mit einer Blindscheibe verschlossen und mit ihrem Zentrum auf den Durchstoßpunkt (Durchblickspunkt) der Augensehachse ausgerichtet. Nach erfolgter Ausrichtung wird die Außenkontur der Trägerscheibe entsprechend des Fassungsrandes des zur Verwendung vorgesehenen Brillengestells mittels einer Brillenglas-Kopierschleifmaschine bearbeitet.

Die Durchblicks- oder Durchstoßpunkte werden bei diesem Verfahren mit Hilfe einer Messscheibe ermittelt, die in das zur Verwendung beabsichtigte Brillengestell eingesetzt ist. Der Augenoptiker ermittelt bei vom Patienten aufgesetztem Brillengestell die Durchblickspunkte nach der sogenannten Viktorinschen Methode, gemäß der bei annähernd senkrecht stehendem Mittelscheitel des Brillenglases und bei auf Unendlich akkommodierter Blickrichtung des Patienten die Lage des Pupillenmittelpunktes auf der Messscheibe markiert wird. Mit Hilfe dieser Messscheibe erfolgt dann die korrekte Ausrichtung der Öffnung der Trägerscheibe.

Mit diesem bekannten Verfahren ist die genaue Ein- und Anpassung eines optischen Systems in eine Fernrohr- oder Lupenbrille durch den Augenoptiker möglich, wobei die mit diesem Verfahren mögliche präzise Anpassbarkeit an die anatomischen Gegebenheiten des Patienten Garant für einen tatsächlichen Seherfolg ist.

Das bekannte Verfahren erfordert jedoch trotz seiner Einfachheit eine Reihe von Arbeitsschritten, die ihrerseits wieder Ursache für eine fehlerhafte Anpassung sein können, wobei insbesondere das Ausrichten der Adapterscheibe auf den Durchblickspunkt und deren nachträgliche Bearbeitung in der Kopierschleifmaschine Fehlerquellen darstellen können.

Der Erfindung liegt nun die Aufgabe zugrunde, ein Verfahren zum Anfertigen einer Fernrohr- oder Lupenbrille anzugeben, das mit möglichst wenigen fehlerverursachenden Arbeitsschritten besonders einfach, schnell und genau durchgeführt werden kann. Außerdem liegen der Erfindung die Aufgaben zugrunde, eine nach diesem Verfahren hergestellte Fernrohr- oder Lupenbrille sowie einen zur Durchführung des Verfahrens geeigneten Montagesatz anzugeben.

Die genannten Aufgaben werden gemäß der Erfindung jeweils gelöst mit den Merkmalen der Patentansprüche 1 oder 2, 5 bzw. 19.

Das Verfahren zur Anfertigung einer Fernrohr- oder Lupenbrille umfasst die folgenden Verfahrensschritte:
a) Einsetzen einer ersten, eine erste exzentrische kreisrunde Durchgangsöffnung aufweisenden kreisrunden Aufnahmescheibe in die Aufnahmeöffnung einer Trägerscheibe,
b) Einsetzen einer zweiten, eine zweite exzentrische Durchgangsöffnung aufweisenden kreisrunden Aufnahmescheibe in die erste Durchgangsöffnung der ersten Aufnahmescheibe vor oder nach deren Einsetzen in die Trägerscheibe,
c) Einsetzen der Trägerscheibe in einen Fassungsrand eines Brillengestells vor oder nach dem Einsetzen der Aufnahmescheiben,
d) Verdrehen der ersten und zweiten Aufnahmescheibe in der Aufnahmeöffnung bzw. ersten Durchgangsöffnung bei von einer Person aufgesetztem Brillengestell bis die Mitte der zweiten Durchgangsöffnung mit dem Durchblickspunkt des Patienten zusammenfällt,
e) Fixieren dieser Drehposition,
f) Einsetzen eines optischen Systems vor oder nach dem Fixieren der Drehposition.

Durch die Verwendung zweier Aufnahmescheiben mit jeweils exzentrisch angeordneten Durchgangsöffnungen, die relativ zueinander und relativ zur Trägerscheibe drehbar in dieser angeordnet sind, kann je nach Drehposition der ersten und zweiten Aufnahmescheibe sowohl die Pupillendistanz als auch die Höhenlage der Durchblickspunkte in einem weiten Bereich variiert werden. Die auf diese Weise ermittelte korrekte Position braucht dann nur noch fixiert zu werden, so dass zwischengelagerte und fehlerverursachende Arbeitsschritte, bei denen eine Dejustage erfolgen kann, entfallen.

Das Verfahren kann auch gemäß Patentanspruch 2 mit einer Trägerscheibe erfolgen, in die die beiden Aufnahmescheiben bereits werkseitig eingesetzt sind. Der Augenoptiker muss in diesem Falle nur noch die vorkonfektionierte Trägerscheibe in den Fassungsrand des für die Person ausgesuchten Brillengestells (Systemträger) einsetzen und durch Drehen der Aufnahmescheiben die zweite Durchgangsöffnung auf den Durchblickspunkt ausrichten und die korrekte Position mit geigneten Klemmmitteln fixieren.

Die Verwendung einer Exzenter-Anordnung zur Aufnahme eines optischen Systems für eine Versuchsbrille ist grundsätzlich bereits aus einem Prospektblatt der E-Vision Optics B.V. bekannt. Das dort als DEC-System bekannte Hilfsmittel zur Einund Anpassung optischer Systeme in eine Fernrohr- oder Lupenbrille ist jedoch nur zum Einbau in ein universelles Versuchsgestell konzipiert, das dazu dient, dem Patienten die Möglichkeit zu geben, über einen längeren Zeitraum zu testen, ob eine Fernrohr- oder Lupenbrille tatsächlich die in sie gesetzten Erwartungen hinsichtlich einer Verbesserung der Sehfähigkeit erfüllen kann. Das bekannte DEC-System dient somit nicht zur Herstellung einer Fernrohr- oder Lupenbrille sondern ermöglicht allenfalls eine Hilfestellung bei der Beurteilung der Frage, ob eine Fernrohr- oder Lupenbrille sinnvoll genutzt werden wird. Die endgültige Anfertigung der Fernrohr- oder Lupenbrille erfolgt dann nach den im Stand der Technik bekannten Verfahren, zu denen beispielsweise das in der eingangs erwähnten DE 3530649C1 beschriebene Verfahren zählt.

Die Erfindung beruht nun auf der Erkenntnis, dass die beim bekannten DEC-System mögliche individuelle Anpassung an die anatomischen Gegebenheiten des Patienten grundsätzlich geeignet ist, eine für den dauerhaften Gebrauch vorgesehene Fernrohr- oder Lupenbrille herzustellen, indem ein solches Exzenter-System unmittelbar in die Trägerscheibe eines zur Verwendung bei der endgültig hergestellten Fernrohr- oder Lupenbrille vorgesehenen Brillengestells eingepasst wird.

Vorzugsweise ist dabei eine lösbare, d. h. reversible Fixierung der Drehposition vorgesehen. Dies ermöglicht mit geringem Aufwand eine erneute Anpassung, falls beim Tragen der Brille Probleme aufgetreten sind.

Insbesondere wird in die zweite Durchgangsöffnung zum Ausrichten ihrer Mitte auf die Durchblickspunkte eine mit einem Fadenkreuz versehene Justierscheibe eingesetzt. Dadurch ist die genaue mittige Ausrichtung erleichtert.

Bei der erfindungsgemäßen Fernrohr- oder Lupenbrille ist gemäß den Merkmalen des Patentanspruches 5 in einer kreisrunden Aufnahmeöffnung einer in einem Fassungsrand fixierten Trägerscheibe drehfixiert eine erste Aufnahmescheibe eingesetzt, die eine exzentrisch angeordnete erste kreisrunde Durchgangsöffnung aufweist, in die drehfixiert eine zweite Aufnahmescheibe mit einer ebenfalls exzentrisch angeordneten zweiten Durchgangsöffnung eingesetzt ist, die das optische System aufnimmt. Durch die doppelt exzentrische Anordnung zweier Aufnahmescheiben in die kreisrunde Aufnahmeöffnung der Trägerscheibe kann je nach Drehposition der ersten und zweiten Aufnahmescheibe sowohl die Pupillendistanz als auch die Höhenlage der Durchblickspunkte in einem weiten Bereich variiert werden.

In einer bevorzugten Ausgestaltung der Erfindung weisen die erste und/oder zweite Aufnahmescheibe an ihrem Umfang einen ersten bzw. zweiten axialen Überstand zum Herstellen einer Steckpassung in der Aufnahmeöffnung bzw. ersten Durchgangsöffnung auf. Durch diese Maßnahmen ist ein einfacher, d.h. ohne Werkzeug möglicher Einbau der ersten Aufnahmescheibe in die Trägerscheibe bzw. ein einfacher Zusammenbau der Aufnahmescheiben bei zugleich noch möglicher Verdrehbarkeit der Aufnahmescheiben relativ zueinander und relativ zur Trägerscheibe möglich.

Vorzugsweise sind der erste und/oder zweite axiale Überstand jeweils aus einer Mehrzahl von Haltefingern gebildet. Durch die Federwirkung dieser Haltefinger ist eine sichere, demontierbare Steckpassung möglich

Alternativ ist als erster und/oder zweiter axialer Überstand jeweils ein Haltering vorgesehen. Dadurch wird eine besonders sicherer Presssitz ermöglicht.

In einer weiteren bevorzugten Ausführungsform ist zur Drehfixierung der ersten Aufnahmescheibe in der Aufnahmeöffnung eine erste demontierbare Klemmeinrichtung vorgesehen. Dies ermöglicht eine einfache nachträgliche Korrektur der Lage der ersten Aufnahmescheibe.

Insbesondere ist als erste Klemmeinrichtung ein Ring vorgesehen, der in die durch den ersten axialen Überstand gebildete Vertiefung eingesetzt ist.

In einer besonders bevorzugten Ausführungsform ist als erste Klemmeinrichtung eine optisch transparente, insbesondere aus einem Polymer bestehende Klemmscheibe vorgesehen, die in die durch den ersten axialen Überstand gebildete Vertiefung eingesetzt ist. Dies ermöglicht ein besonders sicheres Verklemmen der ersten Aufnahmescheibe.

In einer vorteilhaften Ausführungsform ist zum Drehfixieren der zweiten Aufnahmescheibe in der ersten Durchgangsöffnung eine demontierbare zweite Klemmeinrichtung vorgesehen. Dies ermöglicht gemeinsam mit der demontierbaren ersten Klemmeinrichtung eine nachträgliche Korrektur der Einbaulage des optischen Systems.

Vorzugsweise ist als zweite Klemmeinrichtung ebenfalls ein Ring vorgesehen ist, der in die durch den zweiten axialen Vorsprung gebildete Vertiefung eingesetzt ist.

Alternativ hierzu ist als zweite Klemmeinrichtung ein Ring vorgesehen, der auf eine die Trägerscheibe überstehenden Rand der ersten Aufnahmescheibe aufgeschoben ist.

Insbesondere bestehen erste und zweite Klemmeinrichtung aus einem Stück. Dadurch ist die Montage vereinfacht.

Bei der Verwendung eines Klemmringes oder einer Klemmscheibe ist ohne die Zuhilfenahme eines Werkzeuges eine besonders einfache Drehfixierung möglich. Dies ermöglicht dem Augenoptiker insbesondere bei zur Verfügung gestellter vorkonfektionierter, d. h. mit den Aufnahmescheiben versehener Trägerscheibe, eine problemlose und präzise Anfertigung der Fernrohr- oder Lupenbrille.

In einer weiteren vorteilhaften Ausgestaltung der Erfindung weist der erste und/oder zweite axiale Überstand einen Rasthaken auf, der die Aufnahme- bzw. erste Durchgangsöffnung an ihrem jeweiligen Rand hintergreift und die erste bzw. zweite Aufnahmescheibe in der Aufnahme- bzw. ersten Durchgangsöffnung axial fixiert. Dadurch ist eine axiale Fixierung bei zugleich gegebener Drehbarkeit gewährleistet.

Die Aufnahmescheiben bestehen vorzugsweise aus einem Polymer, das insbesondere optisch transparent ist.

In einer besonders vorteilhaften Ausführungsform ist die Trägerscheibe an der inneren Randfläche der Aufnahmeöffnung mit zumindest einer umlaufenden Nut versehen, in die eine mit einer Ringwulst versehene erste Aufnahmescheibe eingeschnappt werden kann.

Vorzugsweise verläuft die innere Randfläche zumindest annähernd auf einer Kugeloberfläche um den Mittelpunkt der Aufnahmeöffnung und umfasst zur Einstellung eines variablen Konvergenzwinkels eine Mehrzahl von Nuten. Dadurch kann der Konvergenzwinkel besonders einfach an unterschiedliche Erfordernisse angepasst werden.

Ein zur Fertigung der erfindungsgemäßen Fernrohr- oder Lupenbrille geeigneter Montagesatz umfasst folgende Bestandteile:
a) Eine an den Fassungsrand eines vorgegebenen Brillengestells angepasste vorgefertigte Trägerscheibe mit einer vorgefertigten kreisrunden Aufnahmeöffnung,
b) eine erste kreisrunde Aufnahmescheibe mit einer exzentrisch angeordneten ersten kreisrunden Durchgangsöffnung, die in die kreisrunde Aufnahmeöffnung der Trägerscheibe einsetzbar oder eingesetzt ist und in beliebige Drehpositionen verdreht werden kann,
c) eine zweite kreisrunde Aufnahmescheibe mit einer exzentrisch angeordneten zweiten Durchgangsöffnung zur Aufnahme eines optischen Systems, die in die erste Aufnahmescheibe verdrehbar einsetzbar oder eingesetzt ist und in beliebige Drehpositionen verdreht werden kann,
d) Mittel zum Fixieren der ersten bzw. zweiten Aufnahmescheibe in der Aufnahmeöffnung bzw. der ersten Durchgangsöffnung.

Mit einem solchen Montagesatz ist die Anfertigung einer Fernrohrbrille mit dem erfindungsgemäßen Verfahren problemlos möglich.

Vorzugsweise enthält der Montagesatz ein Justierscheibe, die in die zweite Aufnahmescheibe einsetzbar oder eingesetzt ist. Dies erleichtert die genaue Ermittlung des Durchblickspunktes.

In einer besonders vorteilhaften Ausgestaltung des Montagesatzes sind Mittel zum werkzeugfreien Fixieren der Drehpositionen der Aufnahmescheiben vorgesehen. Diese ermöglichen insbesondere bei vorkonfektionierter, d. h. bereits mit den Aufnahmescheiben versehener Trägerscheibe, eine besonders einfache Anfertigung der Fernrohr- oder Lupenbrille.

Zur weiteren Erläuterung der Erfindung wird auf die Ausführungsbeispiele der Zeichnung verwiesen. Es zeigen:
- Fig. 1: Eine Fernrohr- oder Lupenbrille gemäß der Erfindung in einer schematischen Explosionsdarstellung,
- Fig.2: eine Draufsicht auf den Montageeinsatz,
- Fig.3: ein Ausführungsbeispiel einer ersten Aufnahmescheibe in einem Längsschnitt parallel zur optischen Achse,
- Fig.4: eine zweite Aufnahmescheibe ebenfalls in einem Längsschnitt,
- Fig.5: Eine ausschnittweise Schnittdarstellung der fertigmontierten Fernrohr- oder Lupenbrille,
- Fig.6: einen in die Trägerscheibe eingesetzten keilförmigen Adapterring zum Einstellen eines Konvergenzwinkels.
- Fig. 7a,b: eine alternative Ausgestaltung einer ersten Aufnahmescheibe bzw. Trägerscheibe in einer Draufsicht auf die Schmalseite bzw. in einem Längsschnitt.

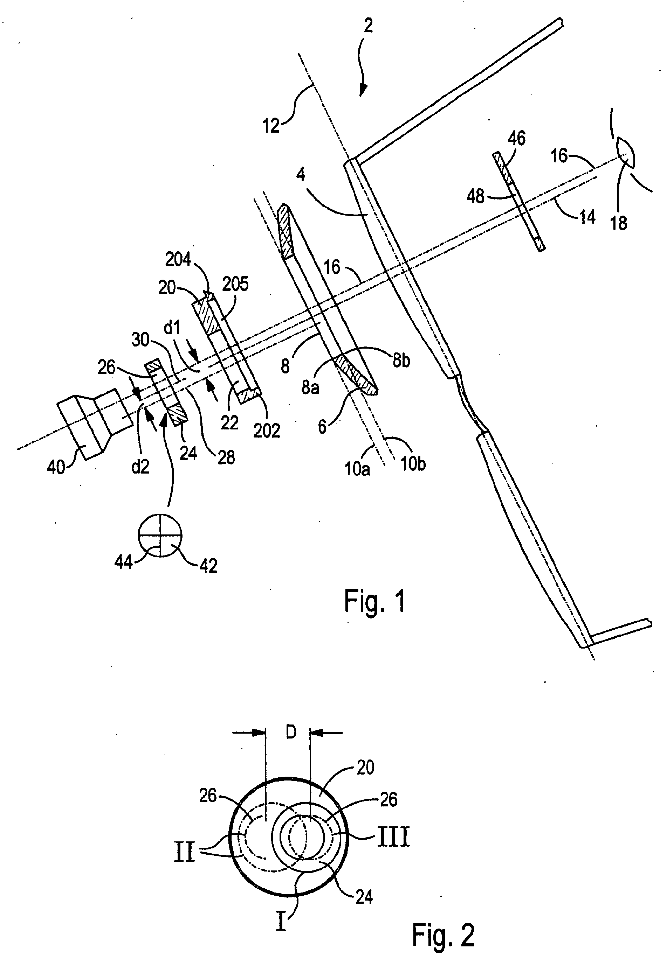

Gemäß Figur 1 wird in den Fassungsrand 4 eines Brillengestells 2 eine Trägerscheibe 6 eingesetzt, die mit einer vorgefertigten kreisrunden Aufnahmeöffnung 8 versehen ist. Fassungsrand 4, Trägerscheibe 6 und Aufnahmeöffnung 8 sind vorgefertigt und aufeinander derart abgestimmt, dass die von den Kanten 8a,b der Aufnahmeöffnung 8 jeweils festgelegten Ebenen 10a bzw. b parallel zur Fassungsebene 12 und somit bei korrekt sitzendem Brillengestell 2 senkrecht zu einer auf unendlich eingestellten Pupillenachse 14 einer nicht mit einer Augenfehlstellung (Schielen) behafteten Person orientiert ist. Mit anderen Worten: Die Mittenachse 16 der Aufnahmeöffnung 8 verläuft parallel zur Pupillenachse (Sehachse) 14 der auf unendlich eingestellten Pupille 18. Im Ausführungsbeispiel ist aus ästhetischen Gründen eine gewölbte Trägerscheibe 6 vorgesehen. Dies ist möglich, da durch die Vorfertigung der Aufnahmeöffnung 8 sichergestellt werden kann, dass die von dieser festgelegte Ebene parallel zur Fassungsebene verläuft. Alternativ hierzu kann auch eine plane Trägerscheibe verwendet werden.

In die Aufnahmeöffnung 8 ist eine erste kreisrunde Aufnahmescheibe 20 eingesetzt, die eine exzentrisch, d.h. um den Abstand d1 von der Mittenachse 16 der Aufnahmeöffnung 8 bzw. der ersten Aufnahmescheibe 20 versetzte kreisrunde erste Durchgangsöffnung 22 aufweist.

In die erste Durchgangsöffnung 22 der ersten Aufnahmescheibe 20 wird eine zweite, ebenfalls kreisrunde Aufnahmescheibe 24 eingesetzt, die eine ebenfalls exzentrisch angeordnete zweite Durchgangsöffnung 26 aufweist. Der Abstand d2 zwischen der Mittenachse 28 der zweiten Aufnahmescheibe 24, die mit der Mittenachse 16 der ersten Durchgangsöffnung 22 zusammenfällt und der Mittenachse 30 der zweiten Durchgangsöffnung 26 ist mit d2 bezeichnet. Die Mittenachse 30 fällt bei korrekter Drehposition der ersten und zweiten Aufnahmescheibe 20 bzw. 24 mit der Pupillenachse 14 des auf unendlich eingestellten Auges zusammen, d.h. der Durchblickspunkt liegt in der Mitte der zweiten Durchgangsöffnung 26.

In die zweite Durchgangsöffnung 26 ist ein optisches System 40, im Beispiel anhand der kurzen Bauweise erkennbar ein Galileisystem, eingesetzt, beispielsweise mittels eines in der Figur nicht dargestellten Gewindes eingeschraubt.

Die Aufnahmescheiben 20 und 24 bilden einen Montageeinsatz und sind in der Figur in Drehpositionen dargestellt, bei denen sich die erste Durchgangsöffnung 22 bei einer Draufsicht auf die Trägerscheibe 6 von vorne in extremer rechter Position und die zweite Durchgangsöffnung 26 in extremer linker Position befinden.

Das optische System 40 ist gegebenenfalls durch einen in der Figur nicht dargestellten Konterring an der zweiten Aufnahmescheibe 24 fixiert.

Die Außendurchmesser der ersten bzw. zweiten Aufnahmescheibe 20, 24 sind so auf die jeweilige Aufnahmeöffnung 8 bzw. erste Durchgangsöffnung 22 abgestimmt, dass diese im eingesteckten Zustand gerade noch innerhalb der jeweiligen Öffnungen verdreht werden können. Die jeweiligen Passungen sind so bemessen, dass sichergestellt ist, dass eine einmal eingestellte Drehposition der ersten und zweiten Aufnahmescheibe 20 bzw. 24 innerhalb der Aufnahmeöffnung 8 bzw. der ersten Durchgangsöffnung 22 sich nicht von selbst oder bei Einschrauben des optischen Systems 40 verstellt.

In der Figur ist außerdem zu erkennen, dass die erste Aufnahmescheibe 20 einen ringförmigen Überstand 202 aufweist, der an seinem äußeren Umfang mit einer umlaufenden Rastnase oder mehreren voneinander in Umfangsrichtung beabstandeten Rastnasen 204 versehen ist, die die Trägerscheibe 6 hintergreifen und die erste Aufnahmescheibe 20 axial fixieren. Eine solche axiale Rast- oder Schnappfixierung kann grundsätzlich auch für die zweite Aufnahmescheibe 24 vorgesehen sein.

Die erste Aufnahmescheibe 20 und die darin eingesteckte zweite Aufnahmescheibe 24 werden nun bei in die Fassung 4 eingesetzter Trägerscheibe 8 solange gegenseitig verdreht, bis der Durchblickspunkt mit der Mitte der zweiten Durchgangsöffnung 26 zusammenfällt. Hierzu kann es zweckmäßig sein, in die zweite Durchgangsöffnung 26 eine mit einem Fadenkreuz 44 versehene Justierscheibe 42 einzusetzen um die korrekte Positionierung zu erleichtern. Diese Justierscheibe 42 wird dann vor dem Einsetzen des optischen Systems 40 entfernt.

Nach korrekter Justierung der ersten und zweiten Aufnahmescheibe 20 bzw. 24 in der Trägerscheibe 6 wird die erste Aufnahmescheibe mittels einer Klemmeinrichtung 46, im Ausführungsbeispiel eine Klemmscheibe oder bei großer Aufbaulänge des optischen Systems 40 ein Klemmring mit einer Durchgangsöffnung 48, innerhalb der Aufnahmeöffnung 8 verspannt. Die Klemmscheibe wird hierzu in die durch den Überstand 202 entstehende Vertiefung 205 der ersten Aufnahmescheibe 20 eingedrückt. In ähnlicher Weise kann auch die zweite Aufnahmescheibe 24 in der ersten Durchgangsöffnung 22 verklemmt werden. Alternativ hierzu kann eine solche Verspannung auch durch Einstecken oder Einschrauben des optischen Systems 40 in die zweite Durchgangsöffnung 26 geschehen. Das Verklemmen der beiden Aufnahmescheiben 20,24 bewirkt deren Drehfixierung.

In der Draufsicht auf den Montageeinsatz gemäß Fig.2 ist zu erkennen, dass je nach Drehposition der ersten und zweiten Aufnahmescheibe 20,24 sowohl eine in der vertikalen als auch in der horizontalen um den Abstand D variierende Lage der Mittenachse 14 der Pupille bzw. der Durchblickspunkte eingestellt werden kann. Position I zeigt eine der Figur 1 entsprechende Einstellung, Position II eine veränderte Drehlage der zweiten Aufnahmescheibe 24 bei relativ zur Trägerscheibe unveränderter Position der ersten Aufnahmescheibe 20. Position III zeigt eine dieser Extremposition II gegenüberliegende Extremposition der zweiten Durchgangsöffnung 26. Entsprechend kann auch ein Ausgleich der unterschiedlichen Höhenlage der Pupille 18 vorgenommen werden (Lage der Pupille in einer Ebene senkrecht zur Zeichenebene der Fig. 1).

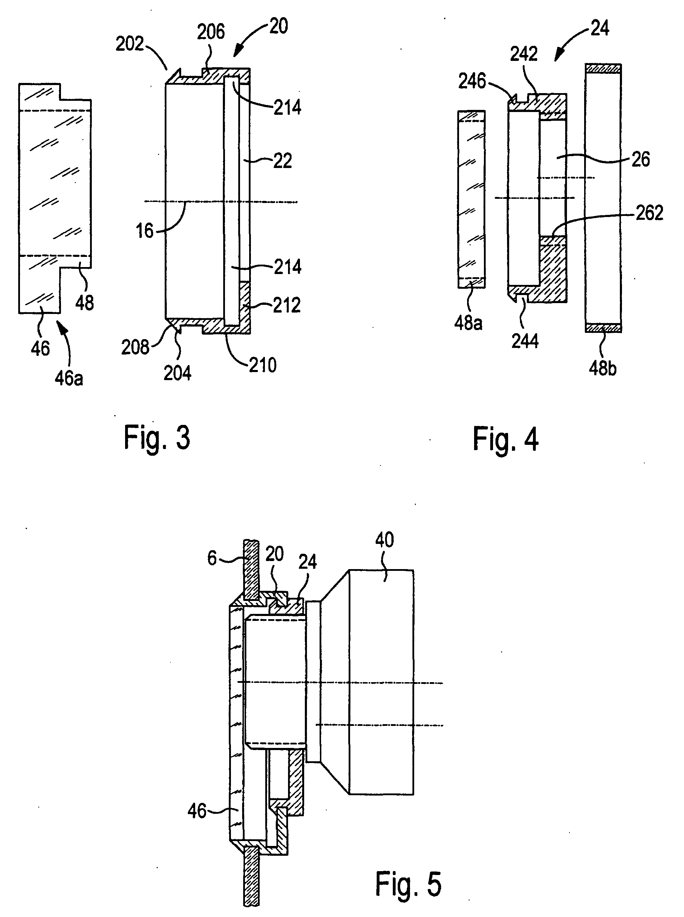

In Fig.3 ist eine erste Aufnahmescheibe 20 in einer konkreten Ausgestaltung dargestellt. Der hülsenartige axiale Vorsprung oder Überstand 202 ist an seinem Umfang mit einer Nut 206 versehen ist, in die die Trägerscheibe 6 eingreift. Die hakenartige und mit einer Gleitschräge 208 versehene Rastnase 204 ermöglicht eine Schnappverbindung zwischen der Trägerscheibe 6 (Fig.1) und der ersten Aufnahmescheibe 20, wenn diese in die Aufnahmeöffnung 8 (Fig.1) eingesteckt wird. Der Überstand 202 bildet auf diese Weise einen Schnappring, der die erste Aufnahmescheibe 20 axial in der Trägerscheibe 6 (Fig.1) sichert. Anstelle des in der Figur dargestellten umlaufenden, ringförmigen Vorsprungs 202 können auch eine Mehrzahl von einzelnen, jeweils in Umfangsrichtung voneinander beabstandete jeweils mit einem Rasthaken versehene Haltefinger vorgesehen sein.

Die erste Durchgangsöffnung 22 ist exzentrisch an einer Stirnseite der ersten Aufnahmescheibe 20 angeordnet. Die hülsenförmige erste Aufnahmescheibe 20 weist einen Überstand 210 auf, so dass die erste Durchgangsöffnung mit einem durch die Aufbaulänge des optischen Systems 40 (Fig.1) bedingten Abstand zur Trägerscheibe 6 angeordnet ist.

Die erste Durchgangsöffnung 22 ist exzentrisch zur Mittenachse 16 derart angeordnet, dass ihr Rand die zylindrische Wand der ersten Aufnahmescheibe 20 tangiert. Die dem optischen System zugewandte Stirnseite wird durch eine dünne Lagerscheibe 212 gebildet, die einen Hinterschnitt 214 aufweist, der zur Verrastung der zweiten Aufnahmescheibe 24 dient, die gemäß Fig.4 ebenfalls einen Überstand 242 mit einer umlaufenden Nut 244 und durch diese gebildete Rastnasen 246 aufweist.

Im Ausführungsbeispiel ist die zweite Durchgangsöffnung 26 der zweiten Aufnahmescheibe 24 mit einem Gewinde 262 versehen, in das das optische System 40 eingeschraubt wird.

In Fig.3 und 4 sind außerdem noch erste und zweite Klemmeinrichtungen in unterschiedlicher Ausgestaltung dargestellt. Gemäß Fig.3 ist eine Klemmeinrichtung 46a vorgesehen, bei der die erste Klemmeinrichtung 46 und zweite Klemmeinrichtung 48 in einem Stück realisiert sind. Dies wird durch eine gestufte Ausgestaltung erreicht. Die gestrichelten Linien 46c deuten an, dass anstelle einer Scheibe auch ein Ring verwendet werden kann. Fig.4 zeigt zwei alternative Ausgestaltungen einer zweiten Klemmeinrichtung 48. Diese kann als innere Klemmscheibe oder Klemmring 48a oder als äußerer Klemmring 48b ausgebildet sein, der den Überstand 210 der ersten Aufnahmescheibe 20 (Fig.3) umgreift.

Fig.5 zeigt die in die Trägerscheibe 6 eingesetzte erste und zweite Aufnahmescheibe 20 bzw. 24 mit darin montiertem optischen System 40. In dieser Fig. ist außerdem zu erkennen, dass eine plane transparente Klemmscheibe 46 aus Kunststoff eingesteckt ist, die die erste Aufnahmescheibe 20 in der Trägerscheibe 6 verklemmt.

Falls erforderlich, können zusätzlich okularseitig am optischen System 40 noch Korrekturlinsen angeordnet werden, um eine Fehlsichtigkeit, beispielsweise einen Astigmatismus, des Patienten auszugleichen. Hierzu kann es erforderlich sein, die Aufbauhöhe des aus erster und zweiter Montageaufnahmescheibe 20, 24 zusammengesetzten Montagesystems zu erhöhen und anstelle einer durchgängigen Klemmscheibe 46 einen Klemm- oder Schraubring zum Fixieren der ersten Aufnahmescheibe 20 einzusetzen.

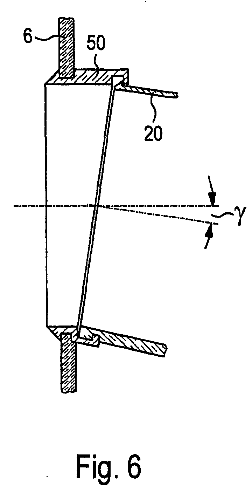

Ebenso kann es gemäß Fig.6 bei der Verwendung als Lupenbrille oder zur Kompensation von axialen Fehlstellungen des Auges erforderlich sein, einen Konvergenzwinkel γ einzustellen. Hierzu wird zusätzlich ein keilförmiger Zwischenring 50 in der Trägerscheibe 6 angeordnet, der dann die erste Aufnahmescheibe 20 aufnimmt.

Grundsätzlich ist es auch möglich, die vorstehend erläuterten Verbindungselemente zwischen der Trägerscheibe und der ersten Aufnahmescheibe und der Trägerscheibe und der zweiten Aufnahmescheibe in Art einer kinematischen Umkehr zu vertauschen und entsprechende Rastelemente auf der Trägerscheibe bzw. der ersten Aufnahmescheibe anzuordnen.

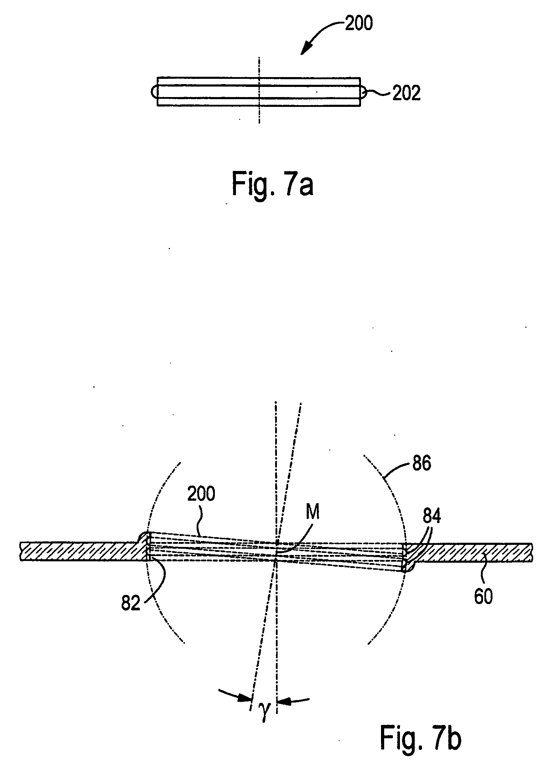

Fig. 7a zeigt eine erste Aufnahmescheibe 200, die mit einem ringförmig umlaufenden Überstand oder einer Ringwulst 202 versehen ist. Die dazu gehörende Trägerscheibe 60 ist gemäß Fig. 7b an der inneren Randfläche 82 der Aufnahmeöffnung 8 mit zumindest einer umlaufenden Nut 84 versehen, in die die mit der Ringwulst 202 versehene erste Aufnahmescheibe 200 eingeschnappt werden kann. Im Ausführungsbeispiel ist die innere Randfläche 82 der Trägerscheibe 60 zumindest annähernd auf einer Kugeloberfläche 86 um den Mittelpunkt M der Aufnahmeöffnung 8 angeordnet und umfasst zur Einstellung unterschiedlicher Konvergenzwinkel γ eine Mehrzahl von Nuten 84. Zur Veranschaulichung ist die erste Aufnahmescheibe 200 in zwei unterschiedlichen Positionen gestrichelt eingezeichnet. In die erste Aufnahmescheibe 200 wird die zweite Aufnahmescheibe wie vorstehend erläutert eingesetzt.

### Bezugszeichenliste

- 2: Brillengestell
- 4: Fassungsrand
- 6, 60: Trägerscheibe
- 8: Aufnahmeöffnung
- 8a,b: Kante
- 10a,b: Ebene
- 12: Fassungsebene
- 14: Pupillenachse
- 16: Mittenachse
- 18: Pupille
- 20,24: erste, zweite Aufnahmescheibe
- 22,26: erste, zweite Durchgangsöffnung
- 28,30: Mittenachse
- 40: optisches System
- 42: Justierscheibe
- 44: Fadenkreuz
- 46,48: erste, zweite Klemmeinrichtung
- 50: Zwischenring
- 82: Randfläche
- 84: Nut
- 86: Kugeloberfläche
- 202,242: erster, zweiter Überstand
- 104: Rastnasen
- 200: zweite Aufnahmescheibe
- 202: Überstand
- 205: Vertiefung
- 206: Nut
- 208: Gleitschräge
- 210: Überstand
- 212: Lagerscheibe
- 214: Hinterschnitt
- 220: Ringwulst
- 242: Überstand
- 244: Nut
- 246: Rastnase
- 262: Gewinde
- γ: Konvergenzwinkel
- M: Mittelpunkt

## Patentansprüche

1. Verfahren zur Anfertigung einer Fernrohr- oder Lupenbrille mit folgenden Verfahrensschritten:
a) Einsetzen einer ersten, eine erste exzentrische kreisrunde Durchgangsöffnung (22) aufweisenden kreisrunden Aufnahmescheibe (20) in die Aufnahmeöffnung (8) einer Trägerscheibe (6),
b) Einsetzen einer zweiten, eine zweite exzentrische Durchgangsöffnung (26) aufweisenden kreisrunden Aufnahmescheibe (24) in die erste Durchgangsöffnung (22) der ersten Aufnahmescheibe (20) vor oder nach deren Einsetzen in die Trägerscheibe (6),
c) Einsetzen der Trägerscheibe in einen Fassungsrand (4) eines Brillengestells (2) vor oder nach dem Einsetzen der Aufnahmescheiben (20,24),
d) Verdrehen der ersten und zweiten Aufnahmescheibe (20,24) in der Aufnahmeöffnung (8) bzw. ersten Durchgangsöffnung (22) bei von einer Person aufgesetztem Brillengestell (2) bis die Mitte der zweiten Durchgangsöffnung (26) mit dem Durchblickspunkt der Person zusammenfällt,
e) Fixieren dieser Drehposition,
f) Einsetzen eines optischen Systems (40) vor oder nach dem Fixieren der Drehposition.

2. Verfahren zur Anfertigung einer Fernrohr- oder Lupenbrille mit folgenden Verfahrensschritten:
a) Einsetzen einer Trägerscheibe 6) in einen Fassungsrand (4) eines Brillengestells (2), die eine Aufnahmeöffnung (8) aufweist, in die eine erste kreisrunde Aufnahmescheibe (20) eingesetzt ist, die eine erste exzentrische kreisrunde Durchgangsöffnung (22) aufweist und in die eine kreisrunden Aufnahmescheibe (24) eingesetzt ist, die eine zweite exzentrische Durchgangsöffnung (26) aufweist,
b) Verdrehen der ersten und zweiten Aufnahmescheibe (20,24) in der Aufnahmeöffnung bzw. ersten Durchgangsöffnung bei von einer Person aufgesetztem Brillengestell (2) bis die Mitte der zweiten Durchgangsöffnung (26) mit dem Durchblickspunkt der Person zusammenfällt,
c) Fixieren dieser Drehposition,
d) Einsetzen eines optischen Systems (40) vor oder nach dem Fixieren der Drehposition.

3. Verfahren nach Anspruch 1 oder 2, bei dem in die zweite Durchgangsöffnung (26) zum Ausrichten ihrer Mitte auf den Durchblickspunkt eine mit einem Fadenkreuz (44) versehene Justierscheibe (42) eingesetzt wird.

4. Verfahren nach Anspruch 1, 2 oder 3, bei dem eine lösbare Fixierung der Drehposition vorgesehen ist.

5. Fernrohr- oder Lupenbrille mit einem optischen System (40), das in einer in einem Fassungsrand (4) fixierten Trägerscheibe (6) eingepasst ist, bei der in eine kreisrunde Aufnahmeöffnung (8) der Trägerscheibe (6) drehfixiert eine erste Aufnahmescheibe (20) mit einer exzentrisch angeordneten ersten kreisrunden Durchgangsöffnung (22) eingesetzt ist, in die drehfixiert eine zweite Aufnahmescheibe (24) mit einer exzentrisch angeordneten zweiten Durchgangsöffnung (26) zur Aufnahme des optischen Systems (40) eingesetzt ist.

6. Fernrohr- oder Lupenbrille nach Anspruch 5, bei der die erste und/oder zweite Aufnahmescheibe (20,24) an ihrem Umfang einen ersten bzw. zweiten axialen Überstand (202,242) zum Herstellen einer Steckpassung in der Aufnahmeöffnung (8) bzw. ersten Durchgangsöffnung (22) aufweist.

7. Fernrohr- oder Lupenbrille nach Anspruch 6, bei der der erste und/oder zweite axiale Überstand (202,242) jeweils aus einer Mehrzahl von Haltefingern gebildet ist.

8. Fernrohr- oder Lupenbrille nach Anspruch 6, bei der als erster und/oder zweiter axialer Überstand (202,242) jeweils ein Haltering vorgesehen ist.

9. Fernrohr- oder Lupenbrille nach einem der Ansprüche 6 bis 8, mit einer ersten demontierbaren Klemmeinrichtung (46) zur Drehfixierung der Aufnahmescheibe (20) in der Aufnahmeöffnung (8).

10. Fernrohr- oder Lupenbrille nach Anspruch 9, bei der als erste Klemmeinrichtung (46) ein Ring vorgesehen ist, der in die durch den ersten axialen Überstand (202) gebildete Vertiefung (205) eingesetzt ist.

11. Fernrohr- oder Lupenbrille nach Anspruch 9, bei der als erste Klemmeinrichtung (46) eine optisch transparente Klemmscheibe vorgesehen ist, die in die durch den ersten axialen Überstand (202) gebildete Vertiefung (205) eingesetzt ist.

12. Fernrohr- oder Lupenbrille nach einem der Ansprüche 9 bis 11, bei der eine zweite demontierbare Klemmeinrichtung (48) zum Drehfixieren der zweiten Aufnahmescheibe (24) in der ersten Durchgangsöffnung (22) vorgesehen ist.

13. Fernrohr- oder Lupenbrille nach Anspruch 12, bei der als zweite Klemmeinrichtung (48) ein Ring vorgesehen ist, der in die durch den zweiten axialen Überstand (242) gebildete Vertiefung eingesetzt ist.

14. Fernrohr- oder Lupenbrille nach Anspruch 12, bei der als zweite Klemmeinrichtung (48) ein Ring vorgesehen ist, der auf einen die Trägerscheibe (6) überstehenden Rand (210) der ersten Aufnahmescheibe (20) aufgeschoben ist.

15. Fernrohr- oder Lupenbrille nach einem der Ansprüche 9 bis 14, bei der erste und zweite Klemmeinrichtung (46,48) aus einem Stück bestehen.

16. Fernrohr- oder Lupenbrille nach einem der vorhergehenden Ansprüche, bei der der erste und/oder zweite axiale Überstand (202,242) einen Rasthaken aufweist, der die Aufnahme- bzw. erste Durchgangsöffnung (8 bzw. 22) an ihrem jeweiligen Rand hintergreift und die erste bzw. zweite Aufnahmescheibe (20,24) in der Aufnahme- bzw. ersten Durchgangsöffnung (8 bzw. 22) axial fixiert.

17. Fernrohr- oder Lupenbrille nach einem der vorhergehenden Ansprüche, deren Trägerscheibe (60) an der inneren Randfläche (82) der Aufnahmeöffnung (8) mit zumindest einer umlaufenden Nut (84) versehen ist, in die eine mit einer Ringwulst (220) versehene erste Aufnahmescheibe (200) eingeschnappt werden kann.

18. Fernrohr- oder Lupenbrille nach Anspruch 17, bei der die innere Randfläche (82) zumindest annähernd auf einer Kugeloberfläche (86) um den Mittelpunkt (M) der Aufnahmeöffnung (8) verläuft und zur Einstellung unterschiedlicher Konvergenzwinkel (γ) eine Mehrzahl von Nuten (84) umfasst.

19. Montagesatz für die Herstellung einer Fernrohr- oder Lupenbrille nach einer der vorhergehenden Ansprüche, der folgende Bestandteile umfasst:
a) Eine an den Fassungsrand (4) eines vorgegebenen Brillengestells (2) angepasste vorgefertigte Trägerscheibe (6) mit einer vorgefertigten kreisrunden Aufnahmeöffnung (8),
b) eine erste kreisrunde Aufnahmescheibe (20) mit einer exzentrisch angeordneten ersten kreisrunden Durchgangsöffnung (22), die in die kreisrunde Aufnahmeöffnung (8) der Trägerscheibe (6) einsetzbar oder eingesetzt ist und in beliebige Drehpositionen verdreht werden kann,
c) eine zweite kreisrunde Aufnahmescheibe (24) mit einer exzentrisch angeordneten zweiten Durchgangsöffnung (26) zur Aufnahme eines optischen Systems (40), die in die erste Aufnahmescheibe (20) einsetzbar oder eingesetzt ist und in beliebige Drehpositionen verdreht werden kann,
d) Mittel (46,48) zum Fixieren der ersten bzw. zweiten Aufnahmescheibe (20,24) in der Aufnahmeöffnung (8) bzw. der ersten Durchgangsöffnung (22).

20. Montagesatz nach Anspruch 18, mit einer Justierscheibe (42), die in die zweite Aufnahmescheibe (24) einsetzbar oder eingesetzt ist.

21. Montagesatz nach Anspruch 19 oder 20, mit Mitteln (46,46a,48,48a,48b) zum werkzeugfreien Fixieren der Drehpositionen der Aufnahmescheiben (20,24).
